# EUROPÄISCHE PATENTSCHRIFT

(11) **EP 3 081 882 B1**
(45) Veröffentlichungstag und Bekanntmachung des Hinweises auf die Patenterteilung: **04.11.2020**
(21) Anmeldenummer: 16163845.7
(22) Anmeldetag: 05.04.2016
(51) Int. Cl.: F25B 21/00

(54) **TEMPERIERGERÄT, INSBESONDERE FAHRZEUGTEMPERIERGERÄT**
TEMPERATURE CONTROL DEVICE, IN PARTICULAR VEHICLE TEMPERATURE CONTROL DEVICE
THERMOREGULATEUR EN PARTICULIER THERMOREGULATEUR DE VEHICULE AUTOMOBILE

(30) Priorität: 09.04.2015 DE 102015105346
(43) Veröffentlichungstag der Anmeldung: 19.10.2016
(73) Patentinhaber: Eberspächer Climate Control Systems GmbH, 73730 Esslingen (DE)
(72) Erfinder: Humburg, Michael, 73035 Göppingen (DE)
(74) Vertreter: Ruttensperger Lachnit Trossin Gomoll

(56) Entgegenhaltungen:
- US-A1- 2013 327 062
- US-A1- 2014 165 595
- US-A1- 2014 366 557
- US-A1- 2015 089 960

## Beschreibung

Die vorliegende Erfindung betrifft ein Temperiergerät, insbesondere ein Fahrzeugtemperiergerät, welches unter Ausnutzung des magnetokalorischen Effektes zum Kühlen oder Erwärmen beispielsweise eines Fahrzeuginnenraums eingesetzt werden kann.

Bei Wärmepumpen, die unter Ausnutzung des magnetokalorischen Effektes arbeiten, wird magnetokalorisches Material alternierend in ein Magnetfeld hinein und aus dem Magnetfeld heraus bewegt. Beim Bewegen in das Magnetfeld hinein findet eine Spinausrichtung der Elektronen des magnetokalorischen Materials unter Einfluss des Magnetfeldes statt. Diese Spinausrichtung bzw. Ausrichtung der magnetischen Momente in dem Magnetfeld hat zur Folge, dass die magnetische Entropie sinkt. Da die Gesamtentropie des Systems nicht abnehmen kann, erhöht sich eine in einem Temperaturanstieg sich manifestierende thermische Entropie. Wird das magnetokalorische Material aus dem Magnetfeld heraus bewegt, findet der umgekehrte Prozess statt. Die Temperatur eines aus einem Magnetfeld herausbewegten magnetokalorischen Materials nimmt ab.

Da im Vergleich zu in konventionellen Kühlgeräten bzw. Wärmepumpen genutzten thermodynamischen Prozessen unter Ausnutzung des magnetokalorischen Effektes nur geringere Temperaturunterschiede hervorgerufen werden können, ist es zur Bereitstellung einer diese Temperaturunterschiede übersteigenden Temperaturänderung des magnetokalorischen Materials bzw. eines von diesem Wärme aufnehmenden Fluids erforderlich, mehrstufige Prozesse durchzuführen, in welchen durch Hintereinanderschaltung mehrerer den magnetokalorischen Effekt nutzender Systeme eine sukzessive Temperaturänderung erreicht wird.

Ein Temperiergerät gemäß dem Oberbegriff des Anspruchs 1 ist aus der US 2014/0366557 A1 bekannt. Bei diesem bekannten Temperiergerät sind in Umfangsrichtung aufeinanderfolgende Wärmeträgermedium-Strömungszonen einander paarweise und unveränderbar zugeordnet, so dass mehrere Paare derartiger zusammenwirkender und jeweilige Wärmeträgermedium-Zirkulationssektoren bereitstellender Baugruppen zueinander parallel wirken.

Es ist die Aufgabe der vorliegenden Erfindung, ein unter Ausnutzung des magnetokalorischen Effekts arbeitendes Temperiergerät, insbesondere Fahrzeugtemperiergerät, bereitzustellen, welches bei einfachem und kompaktem Aufbau zur Erreichung größerer Temperaturänderungen betreibbar ist.

Erfindungsgemäß wird diese Aufgabe durch ein Temperiergerät gemäß Anspruch 1 gelöst.

Das erfindungsgemäße Temperiergerät kann unter Ausnutzung des magnetokalorischen Effekts nach Art einer Wärmepumpe arbeiten, um durch thermische Wechselwirkung einerseits das Wärmeeintragfluid zu kühlen, andererseits das Wärmeabfuhrfluid zu erwärmen. Es wird also Wärme vom Wärmeeintragfluid auf das Wärmeabfuhrfluid übertragen. Je nachdem, ob das erfindungsgemäße Temperiergerät als Heizgerät oder als Kühlgerät genutzt werden soll, kann in einer zugeordneten Wärmetauscheranordnung das Wärmeeintragfluid genutzt werden, um ein anderes Medium, beispielsweise die in einen Fahrzeuginnenraum einzuleitende Luft, zu kühlen, oder kann das Wärmeabfuhrfluid genutzt werden, um beispielsweise die in einen Fahrzeuginnenraum einzuleitende Luft zu erwärmen. Da die Effizienz des erfindungsgemäßen Temperiergeräts mit zunehmender Temperatur insbesondere des Wärmeeintragfluids zunimmt, ist der Einsatz als Kühlgerät, beispielsweise als Fahrzeugklimatisiergerät, besonders vorteilhaft.

Da bei dem erfindungsgemäßen Aufbau durch die Rotation der Magnetfeldanordnung eine entsprechend der Magnetfeldbewegung auftretende Anpassung der Lage der Wärmeträgermedium-Zirkulationssektoren erforderlich ist, ist ferner vorgesehen, dass wenigstens eine Wärmeträgermedium-Strömungszone während einer ersten Betriebsphase zusammen mit einer in einer Drehrichtung der Magnetfeldanordnung auf diese Wärmeträgermedium-Strömungszone folgenden Wärmeträgermedium-Strömungszone einen Wärmeträgermedium-Zirkulationssektor bereitstellt und während einer zweiten Betriebsphase zusammen mit einer in der Drehrichtung der Magnetfeldanordnung dieser Wärmeträgermedium-Strömungszone vorangehenden Wärmeträgermedium-Strömungszone einen Wärmeträgermedium-Zirkulationssektor bereitstellt.

Um in diese Lageanpassung von Wärmeträgermedium-Zirkulationssektoren auch die von Wärmeabfuhrfluid bzw. von Wärmeeintragfluid durchströmbaren Wärmeträgermedium-Strömungszonen einbeziehen zu können, wird vorgeschlagen, dass in einer Betriebsphasenart von erster Betriebsphase und zweiter Betriebsphase die wenigstens eine von Wärmeabfuhrfluid durchströmbare Wärmeträgermedium-Strömungszone von Wärmeabfuhrfluid durchströmbar ist und die wenigstens eine von Wärmeeintragfluid durchströmbare Wärmeträgermedium-Strömungszone von Wärmeeintragfluid durchströmbar ist, und dass in der anderen Betriebsphasenart von erster Betriebsphase und zweiter Betriebsphase die von Wärmeabfuhrfluid durchströmbare Wärmeträgermedium-Strömungszone zusammen mit einer dieser benachbarten Wärmeträgermedium-Strömungszone einen Wärmeträgermedium-Zirkulationssektor bereitstellt und die von Wärmeeintragfluid durchströmbare Wärmeträgermedium-Strömungszone zusammen mit einer dieser benachbarten Wärmeträgermedium-Strömungszone einen Wärmeträgermedium-Zirkulationssektor bereitstellt. Dies bedeutet, dass bei dem erfindungsgemäßen Aufbau die von Wärmeeintragfluid durchströmbare Wärmeträgermedium-Strömungszone tatsächlich nur phasenweise von Wärmeeintragfluid durchströmbar ist, während in Phasen, in welchen sie zum Bereitstellen eines Wärmeträgermedium-Zirkulationssektors genutzt wird, nicht von Wärmeeintragfluid durchströmbar ist. Entsprechendes gilt auch für die von Wärmeabfuhrfluid durchströmbare Wärmeträgermedium-Strömungszone.

Um während der Rotation der Magnetfeldanordnung mehrere derartige Umschaltprozesse und damit einen mehrstufigen Temperierbetrieb erreichen zu können, wird vorgeschlagen, dass erste Betriebsphasen und zweite Betriebsphasen einander alternierend abwechseln.

Zur Erlangung einer mit der Bewegung der Magnetfeldanordnung synchronen Umschaltung zwischen den beiden Betriebsphasenarten wird vorgeschlagen, dass die während einer vollen Umdrehung der Magnetfeldanordnung auftretende Anzahl an ersten Betriebsphasen oder/und zweiten Betriebsphasen gleich der Anzahl an Magnetfelderwärmungsbereichen der Magnetfeldanordnung ist.

Um bei dem erfindungsgemäßen Temperiergerät in einfacher Art und Weise die Möglichkeit zu schaffen, in Wärmeträgermedium-Zirkulationssektoren eine sukzessive Temperaturänderung herbeizuführen, wird vorgeschlagen, dass bei wenigstens einem Wärmeträgermedium-Zirkulationssektor eine Zirkulation von Wärmeträgermedium vorgesehen ist, wobei bei der Zirkulation Wärmeträgermedium aus einer der Wärmeträgermedium-Strömungszonen dieses Wärmeträgermedium-Zirkulationssektors abgezogen und in die andere Wärmeträgermedium-Strömungszone dieses Wärmeträgermedium-Zirkulationssektors eingeleitet wird und Wärmeträgermedium aus der anderen Wärmeträgermedium-Strömungszone abgezogen und in die eine Wärmeträgermedium-Strömungszone eingeleitet wird.

Um unter Berücksichtigung des Umstandes, dass die Magnetfeldanordnung um eine Drehachse rotiert, eine kompakte Bauart erreichen zu können, wird vorgeschlagen, dass das Wärmeträgermedium aus der einen Wärmeträgermedium-Strömungszone an einer Radialseite oder Axialseite des Temperierkörpers, vorzugsweise radial außen, abgezogen und in die andere Wärmeträgermedium-Strömungszone an der selben Radialseite oder Axialseite, vorzugsweise radial außen, eingeleitet wird und aus der anderen Wärmeträgermedium-Strömungszone an der anderen Radialseite oder Axialseite, vorzugsweise radial innen, abgezogen und in die eine Wärmeträgermedium-Strömungszone an der selben Radialseite oder Axialseite, vorzugsweise radial innen, eingeleitet wird. Insbesondere kann vorgesehen sein, dass bei wenigstens einem Wärmeträgermedium-Zirkulationssektor wenigstens eine Wärmeträgermediumleitung vorzugsweise radial außen von der einen Wärmeträgermedium-Strömungszone zu der anderen Wärmeträgermedium-Strömungszone führt und wenigstens eine Wärmeträgermediumleitung vorzugsweise radial innen von der anderen Wärmeträgermedium-Strömungszone zu der einen Wärmeträgermedium-Strömungszone führt.

Zum Ermöglichen einer Anpassung der Lage der Wärmeträgermedium-Zirkulationssektoren an die Lage des Magnetfeldes der Magnetfeldanordnung wird vorgeschlagen, dass bei wenigstens einer Wärmeträgermedium-Strömungszone ein von oder zu dieser führender Leitungsabschnitt einer Wärmeträgermediumleitung mit einem von oder zu einer in der Drehrichtung der Magnetfeldanordnung auf diese Wärmeträgermedium-Strömungszone folgenden Wärmeträgermedium-Strömungszone führenden Leitungsabschnitt einer Wärmeträgermediumleitung verbindbar ist oder mit einem von oder zu einer in der Drehrichtung der Magnetfeldanordnung dieser Wärmeträgermedium-Strömungszone vorangehenden Wärmeträgermedium-Strömungszone führenden Leitungsabschnitt einer Wärmeträgermediumleitung verbindbar ist. Insbesondere kann dabei vorgesehen sein, dass der von oder zu der wenigstens einen Wärmeträgermedium-Strömungszone führende Leitungsabschnitt einer Wärmeträgermediumleitung während einer ersten Betriebsphase mit dem von oder zu der in der Drehrichtung der Magnetfeldanordnung auf diese Wärmeträgermedium-Strömungszone folgenden Wärmeträgermedium-Strömungszone führenden Leitungsabschnitt einer Wärmeträgermediumleitung verbunden ist und während einer zweiten Betriebsphase mit dem von oder zu der in der Drehrichtung der Magnetfeldanordnung dieser Wärmeträgermedium-Strömungszone vorangehenden Wärmeträgermedium-Strömungszone führenden Leitungsabschnitt einer Wärmeträgermediumleitung verbunden ist.

Eine Umschaltbarkeit zwischen diesen verschiedenen Strömungszuständen bzw. Strömungsverbindungen kann beispielsweise dadurch erreicht werden, dass die Leitungsabschnitte durch ein schaltbares Ventil verbindbar sind.

Um bei den Wärmeträgermedium-Zirkulationssektoren die für die Temperaturveränderung erforderliche Zirkulation aufbauen zu können, wird vorgeschlagen, dass wenigstens einem, vorzugsweise jedem, Wärmeträgermedium-Zirkulationssektor eine Wärmeträgermediumpumpe zugeordnet ist.

Die Anzahl der zum Bereitstellen der verschiedenen Wärmeträgermedium-Zirkulationssektoren einzusetzenden Wärmeträgermediumpumpen kann gemäß einem vorteilhaften Aspekt der vorliegenden Erfindung dadurch gering gehalten werden, dass in Zuordnung zu jeder zweiten der in Umfangsrichtung aufeinanderfolgenden Wärmeträgermedium-Strömungszonen eine Wärmeträgermediumpumpe vorgesehen ist, derart, dass diese Wärmeträgermedium-Strömungszonen in einer ersten Betriebsphase zusammen mit den in der Drehrichtung der Magnetfeldanordnung auf diese folgenden Wärmeträgermedium-Strömungszonen jeweils einen Wärmeträgermedium-Zirkulationssektor bereitstellen und in einer zweiten Betriebsphase zusammen mit den in der Drehrichtung der Magnetfeldanordnung diesen vorangehenden Wärmeträgermedium-Strömungszonen jeweils einen Wärmeträgermedium-Zirkulationssektor bereitstellen.

Bei dem erfindungsgemäßen Temperiergerät kann eine Mehrzahl von Wärmeträgermedium-Zirkulationssektoren in Umfangsrichtung aufeinander folgend bereitgestellt sein, so dass eine stufenartige Temperaturänderung von Sektor zu Sektor erreichbar ist.

Um dabei die erforderliche thermische Wechselwirkung mit der Umgebung bereitstellen zu können, wird vorgeschlagen, dass zwischen zwei in Umfangsrichtung aufeinander folgenden Wärmeträgermedium-Zirkulationssektoren eine von Wärmeeintragfluid durchströmbare oder/und umströmbare Wärmeträgermedium-Strömungszone und eine von Wärmeabfuhrfluid durchströmbare oder/und umströmbare Wärmeträgermedium-Strömungszone angeordnet sind.

Um Leckagen des Wärmeträgermediums, welches im Allgemeinen eine Flüssigkeit ist, zu vermeiden, wird vorgeschlagen, dass der Temperierkörper in einem Temperierkörpergehäuse aufgenommen ist.

Bei einer baulich einfach zu realisierenden Ausgestaltung wird für die Erzeugung der zur Erlangung des magnetokalorischen Effekts erforderlichen Magnetfelder vorgeschlagen, dass die Magnetfeldanordnung an wenigstens einer axialen Stirnseite oder wenigstens einer Radialseite des Temperierkörpers eine Mehrzahl von in Umfangsrichtung aufeinander folgend mit Abstand zueinander angeordneten und im Wesentlichen die Magnetfeld-Erwärmungsbereiche bereitstellenden Magneten, vorzugsweise Permanentmagnete, umfasst, wobei zwischen in Umfangsrichtung mit Abstand zueinander angeordneten Magneten die Kühlbereiche bereitgestellt sind. Dabei können beispielsweise in Umfangsrichtung aufeinander folgende Magnete an einem zur Drehung um die Drehachse antreibbaren Magnetträgerring getragen sein.

Bei einer besonders vorteilhaften Variante wird vorgeschlagen, dass an beiden axialen Stirnseiten des Temperierkörpers jeweils eine Mehrzahl von in Umfangsrichtung um die Drehachse aufeinander folgend und mit Abstand zueinander angeordneten Magneten vorgesehen ist, wobei wenigstens einem, vorzugsweise jedem, Magnet an einer Stirnseite ein Magnet an der anderen Stirnseite axial gegenüberliegt.

Um die Temperiereffizienz des erfindungsgemäßen Temperiergeräts weiter zu steigern, wird vorgeschlagen, dass wenigstens zwei in Richtung der Drehachse aufeinander folgend angeordnete Temperierkörper vorgesehen sind, wobei vorzugsweise jedem Temperierkörper eine Magnetfeldanordnung zugeordnet ist.

Die vorliegende Erfindung wird nachfolgend mit Bezug auf die beiliegenden Figuren detailliert beschrieben. Es zeigt:
- Fig. 1: bei Längsschnittansicht eines den magnetokalorischen Effekt nutzenden Temperiergeräts;
- Fig. 2: eine Schnittansicht des Temperiergeräts der Fig. 1, geschnitten längs einer Linie II-II in Fig. 1;
- Fig. 3: eine Schnittansicht des Temperiergeräts der Fig. 1, geschnitten längs einer Linie III-III in Fig. 1;
- Fig.4: eine Prinzipdarstellung zur Verdeutlichung der für die Bereitstellung lagevariabler Wärmeträgermedium-Zirkulationssektoren vorgesehen Wärmeträgermediumleitungen;
- Fig. 5: einer der Fig. 4 entsprechende Darstellung des Temperiergeräts während einer ersten Betriebsphase;
- Fig. 6: einer der Fig. 4 entsprechende Darstellung des Temperiergeräts während einer zweiten Betriebsphase;
- Fig. 7: eine der Fig. 1 entsprechende Darstellung einer alternativen Ausgestaltungsform eines Temperiergeräts.

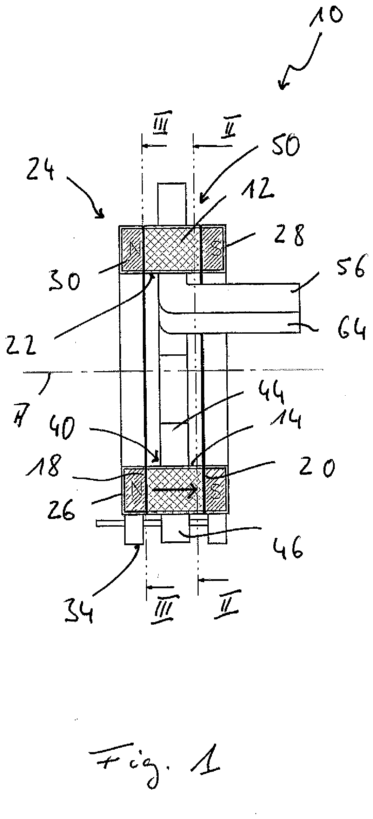

In Fig. 1 ist ein den magnetokalorischen Effekt nutzendes Temperiergerät allgemein mit 10 bezeichnet. Das Temperiergerät 10 umfasst einen ringartig ausgebildeten Temperierkörper 12 aus magnetokalorischem Material. Der sich ringartig um eine Drehachse A erstreckende Temperierkörper 12 ist von einem diesen an seiner radialen Innenseite 14, seiner radialen Außenseite 16 und seinen beiden axialen Stirnseiten 18, 20 umkapselndes Temperierkörpergehäuse 22 umgeben. Somit ist der Temperierkörper 22 in dem im Wesentlichen vollständig abgeschlossenen Innenraum des Temperierkörpergehäuses 22 aufgenommen.

Der Temperierkörper 12 aus magnetokalorischem Material ist porös bzw. durchströmbar, also beispielsweise mit Strömungskanälen aufgebaut, so dass er zur Wärmeabfuhr bzw. zur Wärmezufuhr von Wärmeträgermedium, im Allgemeinen einer Flüssigkeit, umströmt bzw. durchströmt werden kann.

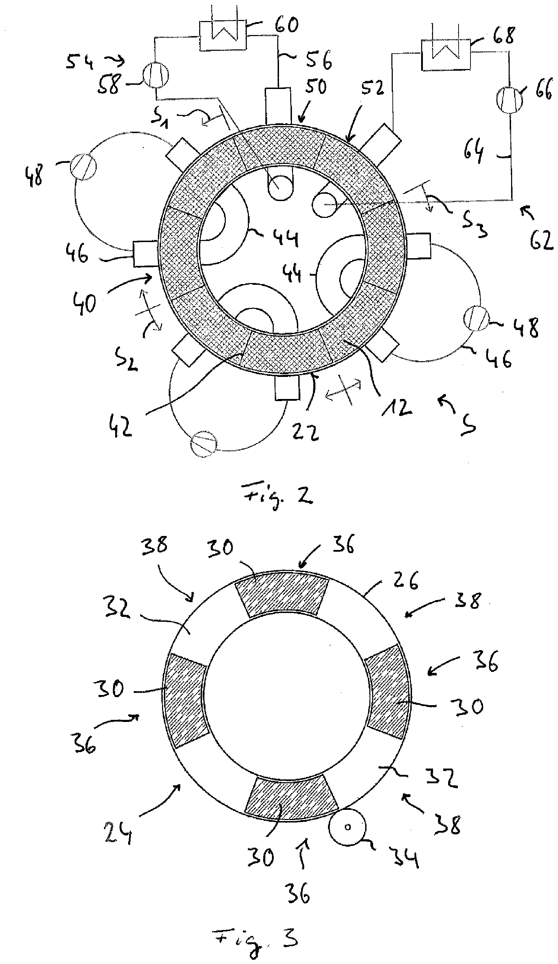

Eine allgemein mit 24 bezeichnete Magnetfeldanordnung umfasst axial beidseits des Temperierkörpers 12 bzw. des Temperierkörpergehäuses 22 jeweils einen Magnetträgerring 26 bzw. 28. Wie die Fig. 3 dies anhand des Magnetträgerrings 26 beispielhaft zeigt, sind an den Magnetträgerringen 26, 28 in Umfangsrichtung aufeinander folgend und mit Umfangsabstand zueinander angeordnet mehrere Magnete, vorzugsweise Permanentmagnete 30, getragen. Die Dimensionierung bzw. Positionierung der Magnete 30 ist vorzugsweise derart, dass deren Umfangserstreckung im Wesentlichen gleich ist zum gegenseitigen Umfangsabstand. Im dargestellten Beispiel erstreckt sich jeder Magnet 30 und jeder Zwischenraum 32 zwischen derartigen Magneten 30 über einen Winkelbereich von 45°.

Die beiden Magnetträgerringe 26, 28 sind derart angeordnet, dass die daran getragenen Magnete 30 sich jeweils axial gegenüberliegen und vorzugsweise in Umfangsrichtung einander vollständig überdecken. Dabei ist die Positionierung derart, dass einem magnetischen Nordpol eines Magneten 30 am Magnetträgerring 26 ein magnetischer Südpol eines Magneten 30 am Magnetträgerring 28 gegenüberliegt, so dass zwischen zwei derartigen einander paarweise gegenüberliegenden Magneten 30 der beiden Magnetträgerringe 26, 28 ein in der Darstellung der Fig. 1 sich von links nach rechts im Wesentlichen geradlinig erstreckendes und dabei den im gleichen radialen Bereich positionierten Temperierkörper 12 durchsetzendes Magnetfeld M generiert wird.

Die beiden beispielsweise miteinander fest verbunden bzw. bezüglich des feststehenden Temperierkörpergehäuses 22 um die Drehachse A gemeinsam drehbaren Magnetträgerringe 26, 28 können durch einen gemeinsamen beispielsweise elektromotorischen Antrieb 34 zur Drehung um die Drehachse A angetrieben werden.

Mit den einander jeweils gegenüberliegend angeordneten Magneten 30 der beiden Magnetträgerringe 26, 28 sind im dargestellten Beispiel insgesamt vier Magnetfeld-Erwärmungsbereiche 36 bereitgestellt. Die zwischen den Magneten 30 gebildeten Zwischenräume 32 bilden jeweilige Kühlbereiche 38.

An dem Temperierkörpergehäuse 22 bzw. dem Temperierkörper 12 sind im dargestellten Beispiel insgesamt acht Wärmeträgermedium-Strömungszonen 40 gebildet. Wie die Fig. 2 dies zeigt, können die Wärmeträgermedium-Strömungszonen in Umfangsrichtung voneinander durch Trennwandungen 42 getrennt sein, so dass eine definierte Fluidströmungstrennung zwischen unmittelbar benachbarten Wärmeträgermedium-Strömungszonen vorgesehen ist. Dies bedeutet, dass bei derartiger Ausgestaltung der ringartig ausgebildete Temperierkörper 12 gleichermaßen mit einer Mehrzahl von in jeweiligen Wärmeträgermedium-Strömungszonen 40 vorgesehenen Segmenten aufgebaut ist. Bei einer alternativen Variante kann der Temperierkörper 12 als durchgehender, in sich geschlossener Ring bereitgestellt werden und die verschiedenen Wärmeträgermedium-Strömungszonen 40 sind in strömungstechnischer Hinsicht nicht voneinander getrennt.

Jeweils zwei in Umfangsrichtung unmittelbar aufeinander folgende Wärmeträgermedium-Strömungszonen 40 stellen in nachfolgend noch beschriebenen Betriebsphasen einen Wärmeträgermedium-Zirkulationssektor S bereit. Bei dem in Fig. 2 erkennbaren Beispiel sind drei derartige in Umfangsrichtung aufeinander folgende Wärmeträgermedium-Zirkulationssektoren S₁, S₂ und S₃ bereitgestellt. Bei jedem Wärmeträgermedium-Zirkulationssektor S sind die beiden diesen bereitstellenden Wärmeträgermedium-Strömungszonen 40 durch eine Wärmeträgermediumleitung 44 an der radialen Innenseite miteinander zur Strömung verbunden und durch eine Wärmeträgermediumleitung 46 an der radialen Außenseite miteinander verbunden. Dabei kann beispielsweise die Wärmeträgermediumleitung 44 im Bereich der radialen Innenseite 14 des Temperierkörpergehäuses 22 in dieses bzw. in dessen Innenraum einmünden, während die Wärmeträgermediumleitung 46 an der radialen Außenseite 16 in das Temperierkörpergehäuse 22 bzw. den Innenraum desselben einmündet. Um eine Wärmeträgermediumzirkulation zwischen den beiden Wärmeträgermedium-Strömungszonen eines jeweiligen Wärmeträgermedium-Zirkulationssektors S aufzubauen, ist beispielsweise jeweils in der radial außen positionierten Wärmeträgermediumleitung 46 eine das Wärmeträgermedium zur Zirkulation antreibende Pumpe 48 vorgesehen. Das beispielsweise durch Wasser bereitgestellte Wärmeträgermedium durchströmt also im Förderbetrieb der jeweiligen Pumpe 48 die Wärmeträgermediumleitungen 44, 46 und die in den einen jeweiligen Wärmeträgermedium-Zirkulationssektor S bereitstellenden Wärmeträgermedium-Strömungszonen 40 liegenden Bereiche des Temperierkörpers 12.

Zwischen den beiden in der in Fig. 2 veranschaulichten Betriebsphase bereitgestellten Wärmeträgermedium-Zirkulationssektoren S₁ und S₃ bzw. den beiden in Umfangsrichtung mit Abstand aufeinander folgenden Wärmeträgermedium-Strömungszonen 40 dieser Wärmeträgermedium-Zirkulationssektoren S₁, S₃ liegt eine von einem Wärmeeintragfluid durchströmbare Wärmeträgermedium-Strömungszone 52 und neben dieser eine vom Wärmeabfuhrfluid durchströmbare Wärmeträgermedium-Strömungszone 50. Der Wärmeträgermedium-Strömungszone 50 ist eine Wärmeabfuhrfluid-Zirkulation 54 mit einer Wärmeträgermediumleitung 56, einer Pumpe 58 und einer Wärmetauscheranordnung 60 zugeordnet. Die Wärmeträgermediumleitung 60 schließt beispielsweise an der radialen Innenseite 14 und der radialen Außenseite 16 an das Temperierkörpergehäuse 22 an. Im Betrieb der Pumpe 58 durchströmt das Wärmeabfuhrfluid die Wärmeträgermediumleitung 56 und somit den im Bereich der Wärmeträgermedium-Strömungszone 50 liegenden Bereich des Temperierkörpers 12. Dabei kann das Wärmeabfuhrfluid Wärme aus dem Temperierkörper 12 aufnehmen und diese im Bereich der Wärmetauscheranordnung 60 beispielsweise auf die Umgebungsluft übertragen.

Der Wärmeträgermedium-Strömungszone 52 ist eine Wärmeträgermediumzirkulation 62 zugeordnet. Diese umfasst eine Wärmeträgermediumleitung 64, eine Pumpe 66 und eine Wärmetauscheranordnung 68. Die Wärmeträgermediumleitung 64 mündet beispielsweise an der radialen Innenseite 14 und der radialen Außenseite 16 im Bereich der Wärmeträgermedium-Strömungszone 52 in das Temperierkörpergehäuse 22 ein. Im Förderbetrieb der Pumpe 66 durchströmt das Wärmeeintragfluid die Wärmetauscheranordnung 68 und kann dabei Wärme von der Umgebung aufnehmen. Das Wärmeeintragfluid strömt in diesem erwärmten Zustand zur Wärmeträgermedium-Strömungszone 52 und überträgt dort Wärme auf den im Bereich der Wärmeträgermedium-Strömungszone 52 positionierten Teil des Temperierkörpers 12. Das Wärmeeintragfluid strömt dann abgekühlt über die Pumpe 66 zurück zur Wärmetauscheranordnung 68.

Die Wechselwirkung des durch die Magnetanordnung 24 in den Magnetfeld-Erwärmungsbereichen 36 bereitgestellten Magnetfeldes M mit dem magnetokalorischen Material des Temperierkörpers 12 führt in diesem Material zu einer Spinausrichtung der Elektronen, also der magnetischen Momente in dem magnetokalorischen Material und somit zu einer Erwärmung des Temperierkörpers 12 in denjenigen Bereichen, die in den Magnetfeld-Erwärmungsbereichen 24 der Magnetfeldanordnung 24 liegen bzw. in diese Bereiche sich hinein bewegen. In denjenigen Bereichen, die außerhalb der Magnetfeld-Erwärmungsbereiche 36, also in den Kühlbereichen 38 liegen bzw. in diese sich hineinbewegen, geht die Spinausrichtung verloren und das magnetokalorische Material kühlt sich ab. Durch das alternierende Hineinbewegen im Magnetfeld-Erwärmungsbereich 36 und Herausbewegen aus Magnetfeld-Erwärmungsbereichen 38 wird aufgrund der Rotation der Magnetanordnung 24 um die Drehachse A eine adiabatische Erwärmung bzw. adiabatische Abkühlung generiert, welche in dem Temperiergerät 10 durch das Hintereinanderschalten mehrerer Wärmeträgermedium-Zirkulationssektoren zu einer entsprechenden Hintereinanderschaltung einer Mehrzahl von Kreisprozessen führt. Einem derartigen Kreisprozess sind jeweils ein Wärmeträgermedium-Strömungsbereich 40 eines Wärmeträgermedium-Zirkulationssektors S sowie die unmittelbar benachbarte Wärmeträgermedium-Strömungszone 40 eines unmittelbar benachbarten Wärmeträgermedium-Zirkulationssektors S zugeordnet. Auch die von Wärmeabfuhrfluid durchströmbare Wärmeträgermedium-Strömungszone 50 und die in Fig. 2 beispielsweise im Gegenuhrzeigersinn darauf folgende Wärmeträgermedium-Strömungszone 40 des Wärmeträgermedium-Zirkulationssektors S₁ bilden eine derartige Stufe eines Kreisprozesses. Gleichermaßen bilden die von Wärmeeintragfluid durchströmbare Wärmeträgermedium-Strömungszone 52 und die im Uhrzeigersinn in Fig. 2 darauf folgende Wärmeträgermedium-Strömungszone 40 des Wärmeträgermedium-Zirkulationssektors S₃ eine Stufe eines derartigen Kreisprozesses.

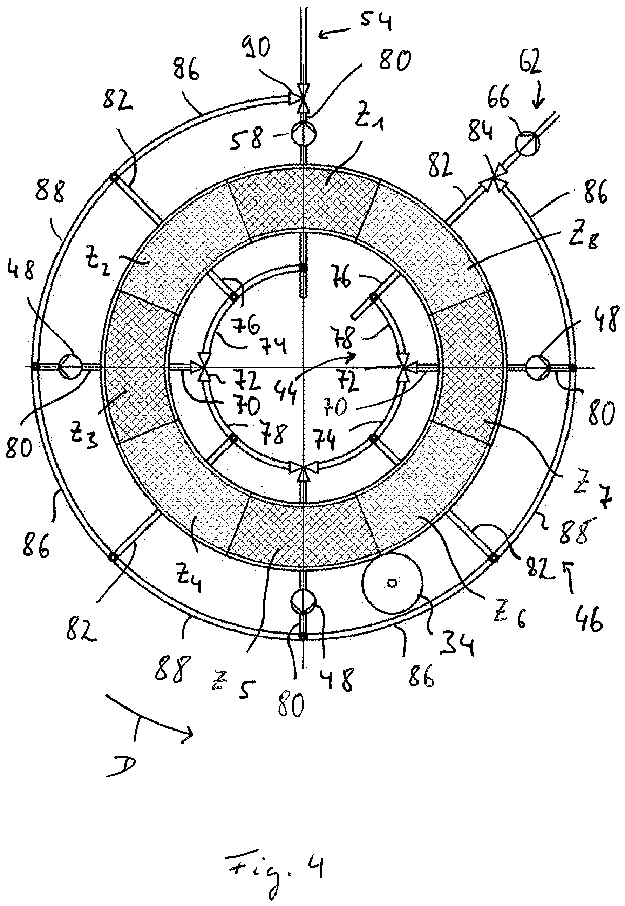

Die Fig. 4 zeigt in größerem Detail das im dargestellten Beispiel mit insgesamt acht Wärmeträgermedium-Strömungszonen 40 aufgebaute Strömungsschema bzw. die hierfür genutzten Wärmeträgermediumleitungen. Für die folgende Beschreibung sind die Wärmeträgermedium-Strömungszonen 40 als Zone Z₁ bis Z₈ durchnummeriert. Dabei entspricht die Zone Z₁ der Wärmeträgermedium-Strömungszone 50, welche in einer nachfolgend noch erläuterten ersten Betriebsphase von dem Wärmeabfuhrfluid durchströmbar ist. Die Zone Z₈ entspricht der Wärmeträgermedium-Strömungszone 52, welche in der ersten Betriebsphase von dem Wärmeeintragfluid durchströmbar ist.

Wie beispielsweise anhand der Zone Z₇ erkennbar, umfasst die diese Zone Z₇ an der radialen Innenseite mit der Zone Z₆ verbindende Wärmeträgermediumleitung 44 einen von der Zone Z₇ wegführenden Leitungsabschnitt 70. Der Leitungsabschnitt 70 führt zu einem schaltbaren Ventil 72, beispielsweise einem 3/2-Wegeventil. Ein Leitungsabschnitt 74 führt von dem Ventil 72 zu einem Leitungsabschnitt 76. Der Leitungsabschnitt 76 mündet radial innen in die Zone Z₆ ein bzw. steht mit dieser in Verbindung. An der radialen Innenseite führen von den in Umfangsrichtung aufeinander folgenden Zonen Z₁ bis Z₈ jeweils alternierend ein Leitungsabschnitt 70 zu einem Ventil 72 bzw. ein nicht zu einem Ventil 72 führender Leitungsabschnitt 76 weg. Die Leitungsabschnitte 76 sind einerseits in Verbindung mit einem zu einem in der Drehrichtung D der Magnetanordnung folgenden Ventil 72 führenden Leitungsabschnitt 74 sowie einem zu einem in der Drehrichtung D vorangehenden Ventil 72 führenden Leitungsabschnitt 78. Jeder Leitungsabschnitt 70 bildet somit zusammen mit dem diesem zugeordneten Ventil 72, dem in der Drehrichtung folgenden Leitungsabschnitt 78 und dem in der Drehrichtung D folgenden Leitungsabschnitt 76 eine Wärmeträgermediumleitung 44, bildet gleichermaßen aber mit dem in der Drehrichtung D vorangehenden Leitungsabschnitt 74 und dem in der Drehrichtung vorangehenden Leitungsabschnitt 76 eine Wärmeträgermediumleitung 744, jeweils abhängig von der Betriebsphase, in welcher die Temperieranordnung 10 sich befindet.

Auch die bzw. jede an der radialen Außenseite vorgesehene Wärmeträgermediumleitung setzt sich aus mehreren Leitungsabschnitten zusammen. Wie wiederum anhand des Beispiels der Zone Z₇ erkennbar, führt von dieser Zone Z₇ radial außen ein Leitungsabschnitt 80 weg, in welchen eine Pumpe 48 integriert ist. In der Drehrichtung D auf den Leitungsabschnitt 80 folgend, ist in Zuordnung zur Zone Z₈ ein Leitungsabschnitt 82 vorgesehen, welcher von diesem radial außen wegführt, und zwar zu einem Ventil 84, beispielsweise einem 3/2-Wegeventil. Zwischen dem von der Zone Z₇ radial außen wegführenden Leitungsabschnitt 80 und dem Leitungsabschnitt 82 erstreckt sich ein Leitungsabschnitt 86 zum Ventil 84. In der Drehrichtung D dem Leitungsabschnitt 80 der Zone Z₇ vorangehend, ist ein Leitungsabschnitt 82 in Zuordnung zur Zone Z₆ vorgesehen. Vom Leitungsabschnitt 80 der Zone Z₇ zum Leitungsabschnitt 82 der Zone Z₆ führt ein Leitungsabschnitt 88. Somit ist in Umfangsrichtung aufeinander folgend eine Wärmeträgermediumleitung 46 jeweils bereitgestellt durch einen Leitungsabschnitt 80, einen Leitungsabschnitt 82 sowie einen Leitungsabschnitt 86 bzw. einen Leitungsabschnitt 88. Auch hier ist zu betonen, dass in jedem Leitungsabschnitt 80, also in Zuordnung zu jeder zweiten der Zonen Z₁ bis Z₈, eine Pumpe 48 bzw. im Falle der Zone Z₁ die Pumpe 58 der Wärmeträgermediumzirkulation 54 vorgesehen ist. Es ist weiter darauf hinzuweisen, dass in Zuordnung zum Leitungsabschnitt 80, welcher von der Zone Z₁ wegführt, ein Ventil 90, beispielsweise 3/2-Wegeventil, vorgesehen ist, in welches auch ein Leitungsabschnitt 86 einmündet.

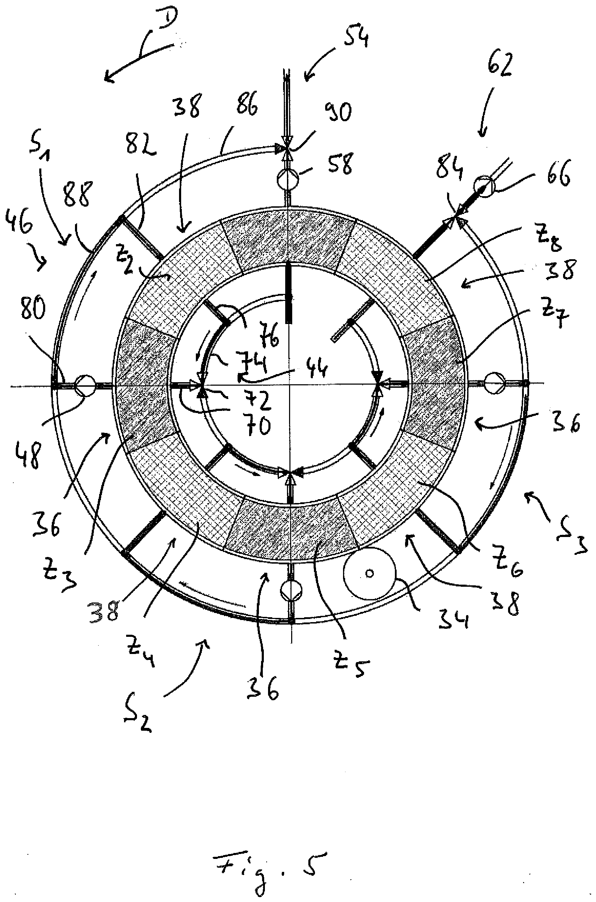

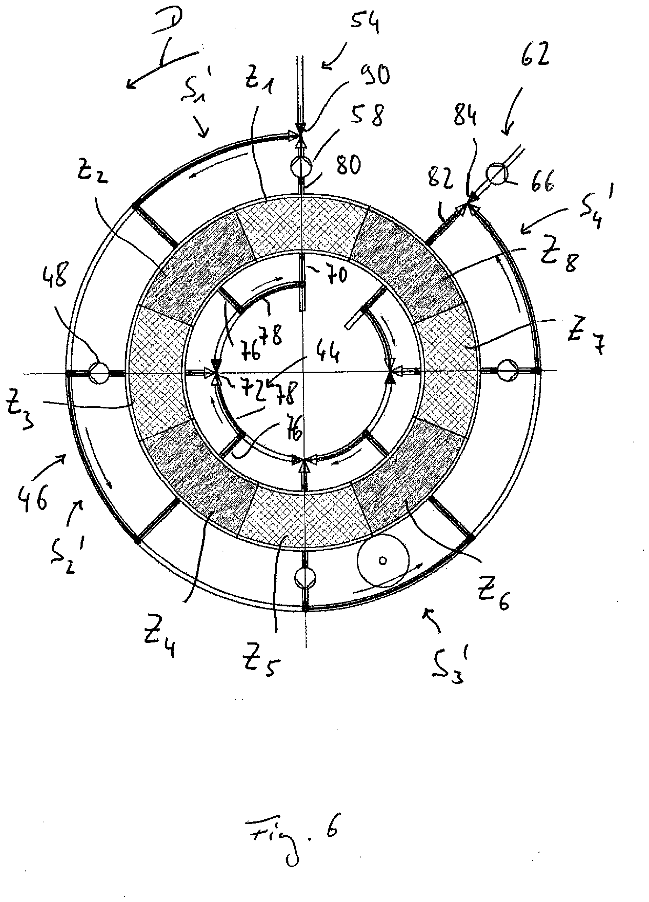

Durch Umschalten der Ventile 72, 82 und 90 können zwei verschiedene, alternierend aufeinander folgende Betriebsphasen eingerichtet werden, welche nachfolgend mit Bezug auf die Figuren 5 und 6 beschrieben werden.

Zunächst wird mit Bezug auf die Fig. 5 die Strömung des Wärmeträgermediums während einer ersten Betriebsphase erläutert. In dieser ersten Betriebsphase sind die beiden Ventile 84 und 90 so gestellt, dass sie die zu diesen führenden Leitungsabschnitte 86 absperren und die Wärmeträgermediumzirkulationen 54 bzw. 62 freigeben, so dass in der Wärmeträgermediumzirkulation 54 das Wärmeabfuhrfluid durch die Zone Z₁ zirkuliert und in der Wärmeträgermediumzirkulation 62 das Wärmeeintragfluid durch die Zone Z₈ zirkuliert. Das der Zone Z₃ zugeordnete Ventil 72 ist so geschaltet, dass es den der Zone Z₃ zugeordneten Leitungsabschnitt 70 mit dem von der Zone Z₂ herführenden Leitungsabschnitt 74 verbindet, während der zur Zone Z₄ führende Leitungsabschnitt 78 abgeschlossen ist. Somit ist mit den den beiden Zonen Z₂ und Z₃ zugeordneten Leitungsabschnitten 76, 74, 72, 80, 88, 82 der erste Wärmeträgermedium-Zirkulationssektor S₁ eingerichtet. In entsprechender Art und Weise ist durch die beiden Zonen Z₄ und Z₅ der Wärmeträgermedium-Zirkulationssektor S₂ eingerichtet und durch die Zonen Z₆ und Z₇ ist der Wärmeträgermedium-Zirkulationssektor S₃ eingerichtet. Zwischen den Zonen Z₂ des Wärmeträgermedium-Zirkulationssektors S₁ und Z₇ des Wärmeträgermedium-Zirkulationssektors S₃ liegen die beiden Wärmeträgermedium-Strömungszonen 50, 52, also die Zonen Z₁, Z₈, durch welche in dieser ersten Betriebsphase das Wärmeabfuhrfluid bzw. das Wärmeeintragfluid zirkulieren kann.

Diese erste Betriebsphase wird durch entsprechende Ansteuerung der Ventile 72, 84, 90 im Wesentlichen während einer Zeitphase eingerichtet, während welcher die Magnete 30 der Magnetanordnung sich im Bereich der Zonen Z₁, Z₃, Z₅ und Z₇ befinden. Aufgrund des magnetokalorischen Effekts werden beim Bewegen der Magnete 30 im Bereich dieser Zonen diese adiabatisch erwärmt. Durch den diese jeweils durchströmenden Strom von Wärmeträgermedium wird Wärme aufgenommen und in die Zonen Z₂, Z₄, Z₆ transportiert. Gleichermaßen wird im Bereich der Zone Z₁ Wärme abgeführt, während im Bereich der Zone Z₈ Wärme eingetragen wird. Bewegen sich die Magnete D bei der Rotation der Magnetanordnung 34 in der Drehrichtung D weiter in den Bereich der Zonen Z₂, Z₄, Z₆ und Z₈, werden die Ventile 72, 84, 90 umgeschaltet, so dass der in Fig. 6 erkennbare Schaltzustand der zweiten Betriebsphase erreicht wird. Mit den Leitungsabschnitten 76, 78, 70, 80, 86, 88 der Zonen Z₁, Z₂ wird nunmehr der erste Wärmeträgermedium-Zirkulationssektor S₁' eingerichtet, wozu das Ventil 90 derart geschaltet ist, dass es eine Verbindung zwischen dem auch die Pumpe 58 enthaltenden Leitungsabschnitt 80 und dem Leitungsabschnitt 86 herstellt, die weitergehende Verbindung zur Wärmeträgermediumzirkulation 54 jedoch unterbricht. In dieser zweiten Betriebsphase ist also die Pumpe 58 der Wärmeträgermediumzirkulation 54 als eine Pumpe des Wärmeträgermedium-Zirkulationssektors S₁' wirksam. Gleichermaßen wird durch die Zonen Z₃ und Z₄ der Wärmeträgermedium-Zirkulationssektor S₂ eingerichtet und durch die Zonen Z₅, Z₆ wird der Wärmeträgermedium-Zirkulationssektor S₃ eingerichtet. Das in der Wärmeträgermediumzirkulation vorgesehene Ventil 84 ist so gestellt, dass es den Leitungsabschnitt 82 mit dem Leitungsabschnitt 86 verbindet, die Strömungsverbindung zur weiteren Wärmeträgermediumzirkulation 62 jedoch unterbricht. Somit ist durch die Zonen Z₇ und Z₈ in dieser zweiten Betriebsphase ein vierter Wärmeträgermedium-Zirkulationssektor S₄' eingerichtet.

Da in dieser zweiten Betriebsphase die Zonen Z₂, Z₄, Z₆ und Z₈ sich im Bereich der die Magnetfeld-Erwärmungsbereiche 36 bereitstellenden Magnete 30 der Magnetanordnung 34 befinden, werden nunmehr diese Zonen bzw. das in diesen Zonen vorhandene magnetokalorische Material des Temperierkörpers 12 adiabatisch erwärmt. Das in den verschiedenen Wärmeträgermedium-Zirkulationssektoren S₁', S₂', S₃' und S₄' zirkulierende Wärmeträgermedium transportiert Wärme aus diesen Zonen Z₂, Z₄, Z₆ und Z₈ in die in Umfangsrichtung jeweils folgenden Kühlbereiche zwischen den Magneten 30, also im Wesentlichen diejenigen Bereiche, in welchen in der zweiten Betriebsphase die Zonen Z₁, Z₃, Z₅ und Z₇ liegen.

Beispielsweise anhand der als Zone Z₄ bezeichneten Wärmeträgermedium-Strömungszone 40 erkennt man, dass während der in Fig. 5 dargestellten ersten Betriebsphase diese mit der in der Drehrichtung D folgenden Zone Z₅ einen Wärmeträgermedium-Strömungssektor S₂ bereitstellt, während in der zweiten Betriebsphase nach Weiterdrehung der Magnetanordnung 30 um etwa 45° diese Zone Z₄ zusammen mit der in der Drehrichtung D dieser vorangehenden Zone Z₃ den Wärmeträgermedium-Zirkulationssektor S₂' bereitstellt. Dies trifft im Wesentlichen für alle Zonen Z₁ bis Z₈ zu. Lediglich die Zonen Z₁ bzw. Z₈ sind nur in der in Fig. 6 veranschaulichten zweiten Betriebsphase als Wärmeträgermedium-Strömungszonen eines jeweiligen Wärmeträgermedium-Zirkulationssektors S₁' bzw. S₄' wirksam. In der ersten Betriebsphase sind diese beiden Wärmeträgermedium-Strömungszonen 50 bzw. 52 Bestandteil der Wärmeträgermediumzirkulationen 54 bzw. 62.

Durch die vorangehend beschriebene alternierende Umschaltung zwischen den beiden Betriebsphasen wird erreicht, dass die Wärmeträgermedium-Zirkulationssektoren angepasst an die Drehbewegung bzw. die Drehpositionierung der Magnetfeldanordnung 24 eingerichtet werden, so dass trotz der Rotation der Magnetfeldanordnung 24 eine definierte Zuordnung von Wärmeträgermedium-Zirkulationssektoren zur Positionierung der durch die Magnete 30 bereitgestellten Magnetfelderwärmungsbereiche 36 bzw. zu den dazwischen gebildeten Kühlbereichen 38 erreicht wird bzw. erhalten bleibt. Somit kann auch bei der Rotation der Magnetfeldanordnung 24 eine stufenartige Hintereinanderschaltung mehrerer magnetokalorischer Kreisprozesse erreicht werden und somit eine sukzessive Erwärmung bzw. Abkühlung erreicht werden.

Um bei der Rotation der Magnetfeldanordnung 24 eine ausreichende thermische Wechselwirkung des die jeweiligen Wärmeträgermedium-Strömungszonen 40 durchströmenden Wärmeträgermediums mit dem darin vorhandenen magnetokalorischen Material des Temperierkörpers 12 zu ermöglichen, kann der Rotationsbetrieb der Magnetfeldanordnung 24 intermittierend bzw. mit variabler Rotationsgeschwindigkeit erfolgen. Somit kann gewährleistet werden, dass immer dann, wenn ein Magnetfeld-Erwärmungsbereich 36 bzw. ein Kühlbereich 38 im Wesentlichen vollständig mit einer Wärmeträgermedium-Strömungszone 40 in Umfangsrichtung ausgerichtet ist, durch vorübergehendes Absenken der Drehgeschwindigkeit der Magnetfeldanordnung 24 oder durch vorübergehendes Anhalten der Magnetfeldanordnung 24 das Wärmeträgermedium aus dem in einem derartigen Zustand in einem Magnetfeld-Erwärmungsbereich 36 positionierten Teil des Temperierkörpers 12 Wärme abtragen kann bzw. in entsprechender Weise in den Kühlbereichen Wärme in den Temperierkörper 12 eintragen kann. Zwischen derartigen Wärmeaustauschphasen mit geringerer Drehgeschwindigkeit bzw. nicht rotierender Magnetfeldanordnung 24 bewegen sich die Magnetfeld-Erwärmungsbereiche 36 bzw. die Kühlbereiche 38 in Bewegungsphasen in der Drehrichtung D weiter, bis sie im Wesentlichen vollständig mit den in der Drehrichtung D folgenden Wärmeträgermedium-Strömungszonen 40 ausgerichtet sind. Im Verlaufe dieser Bewegungsphasen können dann auch die Ventile 72,84, 90 umgeschaltet werden, um eine entsprechende Anpassung der Wärmeträgermedium-Zirkulationssektoren S an die Drehlage der Magnetfeldanordnung 24 zu erreichen.

Durch die Hintereinanderschaltung mehrerer derartiger Stufen, wobei zwei unmittelbar benachbarte Stufen jeweils durch die einer Wärmeträgermediumzirkulation zugeordneten Wärmeträgermediumleitungen 44, 46 verbunden sind, kann im Rotationsbetrieb der Magnetfeldanordnung 24 durch das dabei auftretende alternierende Hineinbewegen und Herausbewegen von Bereichen des Temperierkörpers 12 in das Magnetfeld M bzw. aus dem Magnetfeld M, somit eine stufenartige Erwärmung in den nacheinander geschalteten Kreisprozessstufen generiert werden. Dabei wird bei dem mehrstufigen Prozess Wärme vom Bereich der Wärmeträgermedium-Strömungszone 52 über die Wärmeträgermedium-Zirkulationssektoren S zur Wärmeträgermedium-Strömungszone 50 transportiert. Dies hat letztendlich zur Folge, dass das in der Wärmeträgermediumzirkulation 62 zirkulierende Wärmeträgermedium, also beispielsweise Wasser, beim Durchströmen des Temperierkörpers 12 gekühlt wird und die dabei im Temperierkörper 12 aufgenommene Wärme genutzt wird, um im Bereich der Wärmeträgermedium-Strömungszone 50 das in der Wärmeträgermediumzirkulation 54 zirkulierende Wärmeträgermedium, beispielsweise auch Wasser, zu erwärmen.

Die Wärmetauscheranordnung 68 kann somit nach Art einer Klimaanlage die in einen Fahrzeuginnenraum einzuleitende Luft kühlen. Alternativ besteht die Möglichkeit, im Bereich der Wärmetauscheranordnung 60 die in den Fahrzeuginnenraum einzuleitende Luft zu erwärmen, so dass in diesem Falle das Temperiergerät 10 nach Art einer Heizung arbeiten kann. Da der vorangehend beschriebene Kreisprozess mit zunehmender Umgebungstemperatur, also mit zunehmender Temperatur insbesondere des in der Wärmeträgermediumzirkulation 54 zirkulierenden Wärmeträgermediums effizienter wird, ist der Betrieb zur Klimatisierung besonders vorteilhaft und effizient durchführbar.

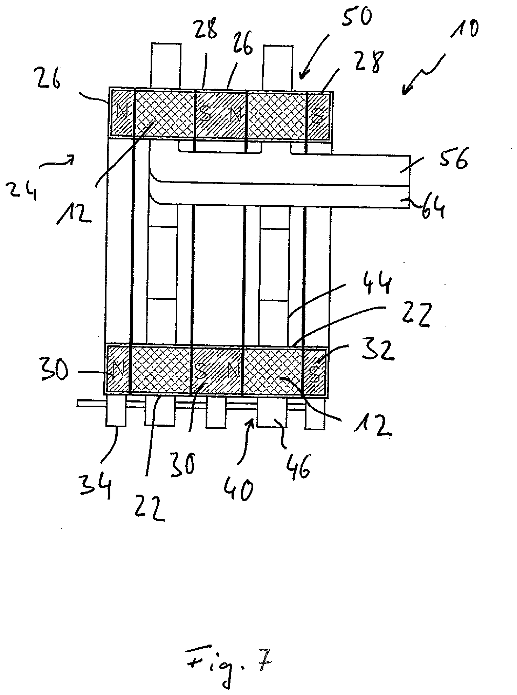

Bei der in Fig. 7 dargestellten Abwandlung sind in Richtung der Drehachse A aufeinander folgend zwei Temperierkörper 12 in diesen jeweils zugeordneten Temperierkörpergehäusen 22 aufgenommen. Gleichermaßen ist jedem Temperierkörper 12 eine Magnetfeldanordnung 24 zugeordnet, diese jeweils umfassend die Magnetträgerringe 26, 28. Dabei können die zwischen den beiden Temperierkörpern 12 positionierten Magnetträgerringe 28, 26 der beiden Magnetfeldanordnungen 24 zu einem gemeinsamen Magnetträgerring zusammengefasst und gemeinsam zur Drehung angetrieben sein.

Die beiden Temperierkörper 12 bzw. Temperierkörpergehäuse 22 sind in der vorangehend beschriebenen Art und Weise von Wärmeträgermedium durchströmbar, wobei bei dem in Fig. 4 dargestellten Beispiel eine strömungstechnische Parallelschaltung vorgesehen ist. Somit kann gewährleistet werden, dass in beiden parallelgeschalteten Temperierkörpern 12 das in einer jeweiligen Zirkulation strömende Wärmeträgermedium in gleicher Art und in gleichem Maße in thermische Wechselwirkung mit dem jeweiligen Temperierkörper 12 tritt.

Es sei hier darauf hingewiesen, dass selbstverständlich auch mehr als zwei Temperierkörper mit jeweiligen Magnetfeldanordnungen axial aufeinander folgend bzw. grundsätzlich in Parallelschaltung miteinander angeordnet bzw. verkoppelt werden können, um die Temperiereffizienz noch weiter zu steigern.

Weiter sei darauf hingewiesen, dass bei der vorangehend beschriebenen Ausgestaltung die Magnetträgerringe auch radial innerhalb und radial außerhalb des Temperierkörpers angeordnet sein könnten, während das Temperierkörpergehäuse bzw. der Temperierkörper jeweils axial von Wärmeträgermedium durchströmbar sind, d. h. die jeweiligen Wärmeträgermediumleitung an den Stirnseiten 18, 20 in das Wärmeträgergehäuse 22 einmünden. Grundsätzlich kann die Anordnung so sein, dass Richtung des Magnetfeldes M der Magnetfeldanordnung im Wesentlichen orthogonal steht zu einer Hauptströmungsrichtung des Wärmeträgermediums in dem Temperierkörper.

Ferner sei darauf hingewiesen, dass durch eine andere Teilung der Magnetfeld-Erwärmungsbereiche und der Kühlbereiche und eine entsprechende Anzahl an Wärmeträgermedium-Strömungszonen auch eine andere Anzahl an Wärmeträgermedium-Zirkulationssektoren und somit eine entsprechend andere Anzahl an aufeinander folgenden Stufen des magnetokalorischen Kreisprozesses erreichbar sind. Beispielsweise kann bei einer Winkelerstreckung der Magnetfeld-Erwärmungsbereiche bzw. der Kühlbereiche über jeweils 36°, also bei entsprechender Einrichtung von zehn Wärmeträgermedium-Strömungszonen, ein fünfstufiger Kreisprozess erreicht werden.

## Patentansprüche

1. Temperiergerät, insbesondere Fahrzeugtemperiergerät, umfassend:
- wenigstens einen von einem Wärmeträgermedium durchströmbaren oder/und umströmbaren, mit magnetokalorischem Material aufgebauten, vorzugsweise ringartigen Temperierkörper (12),
- eine um eine Drehachse (A) drehbare Magnetfeldanordnung (24), wobei die Magnetfeldanordnung (24) in Umfangsrichtung um die Drehachse aufeinanderfolgend angeordnete Magnetfeld-Erwärmungsbereiche (36) und zwischen Magnetfeld-Erwärmungsbereichen (36) Kühlbereiche (38) bereitstellt,
wobei mit dem Temperierkörper (12) eine Mehrzahl von in Umfangsrichtung aufeinander folgenden Wärmeträgermedium-Strömungszonen (40) bereitgestellt ist, wobei wenigstens zwei in Umfangsrichtung einander benachbarte Wärmeträgermedium-Strömungszonen (40) einen Wärmeträgermedium-Zirkulationssektor (S) bereitstellen,
wobei wenigstens eine Wärmeträgermedium-Strömungszone (52) von Wärmeeintragfluid zum Eintragen von Wärme in diese Wärmeträgermedium-Strömungszone (52) durchströmbar oder/und umströmbar ist, oder/und wobei wenigstens eine Wärmeträgermedium-Strömungszone (50) von Wärmeabfuhrfluid zur Abfuhr von Wärme aus dieser Wärmeträgermedium-Strömungszone (50) durchströmbar oder/und umströmbar ist, **dadurch gekennzeichnet, dass** wenigstens eine Wärmeträgermedium-Strömungszone (40) während einer ersten Betriebsphase zusammen mit einer in einer Drehrichtung (D) der Magnetfeldanordnung (24) auf diese Wärmeträgermedium-Strömungszone folgenden Wärmeträgermedium-Strömungszone (40) einen Wärmeträgermedium-Zirkulationssektor (S) bereitstellt und während einer zweiten Betriebsphase zusammen mit einer in der Drehrichtung (D) der Magnetfeldanordnung (24) dieser Wärmeträgermedium-Strömungszone (40) vorangehenden Wärmeträgermedium-Strömungszone (40) einen Wärmeträgermedium-Zirkulationssektor (S) bereitstellt.

2. Temperiergerät nach Anspruch 1, **dadurch gekennzeichnet, dass** in einer Betriebsphasenart von erster Betriebsphase und zweiter Betriebsphase die wenigstens eine von Wärmeabfuhrfluid durchströmbare Wärmeträgermedium-Strömungszone (50) von Wärmeabfuhrfluid durchströmbar ist und die wenigstens eine von Wärmeeintragfluid durchströmbare Wärmeträgermedium-Strömungszone (52) von Wärmeeintragfluid durchströmbar ist, und dass in der anderen Betriebsphasenart von erster Betriebsphase und zweiter Betriebsphase die von Wärmeabfuhrfluid durchströmbare Wärmeträgermedium-Strömungszone (50) zusammen mit einer dieser benachbarten Wärmeträgermedium-Strömungszone (40) einen Wärmeträgermedium-Zirkulationssektor (S₁) bereitstellt und die von Wärmeeintragfluid durchströmbare Wärmeträgermedium-Strömungszone (52) zusammen mit einer dieser benachbarten Wärmeträgermedium-Strömungszone (40) einen Wärmeträgermedium-Zirkulationssektor (S₄') bereitstellt.

3. Temperiergerät nach Anspruch 1 oder 2, **dadurch gekennzeichnet, dass** erste Betriebsphasen und zweite Betriebsphasen einander alternierend abwechseln.

4. Temperiergerät nach einem der Ansprüche 1-3, **dadurch gekennzeichnet, dass** die während einer vollen Umdrehung der Magnetfeldanordnung (34) auftretende Anzahl an ersten Betriebsphasen oder/und zweiten Betriebsphasen gleich der Anzahl an Magnetfelderwärmungsbereichen (36) der Magnetfeldanordnung (24) ist.

5. Temperiergerät nach einem der Ansprüche 1-4, **dadurch gekennzeichnet, dass** bei wenigstens einem Wärmeträgermedium-Zirkulationssektor (S) eine Zirkulation von Wärmeträgermedium vorgesehen ist, wobei bei der Zirkulation Wärmeträgermedium aus einer der Wärmeträgermedium-Strömungszonen (40) dieses Wärmeträgermedium-Zirkulationssektors (S) abgezogen und in die andere Wärmeträgermedium-Strömungszone (40) dieses Wärmeträgermedium-Zirkulationssektors (S) eingeleitet wird und Wärmeträgermedium aus der anderen Wärmeträgermedium-Strömungszone (40) abgezogen und in die eine Wärmeträgermedium-Strömungszone (40) eingeleitet wird.

6. Temperiergerät nach Anspruch 5, **dadurch gekennzeichnet, dass** das Wärmeträgermedium aus der einen Wärmeträgermedium-Strömungszone (40) an einer Radialseite oder Axialseite des Temperierkörpers (12), vorzugsweise radial außen, abgezogen und in die andere Wärmeträgermedium-Strömungszone (40) an der selben Radialseite oder Axialseite, vorzugsweise radial außen, eingeleitet wird und aus der anderen Wärmeträgermedium-Strömungszone (40) an der anderen Radialseite oder Axialseite, vorzugsweise radial innen, abgezogen und in die eine Wärmeträgermedium-Strömungszone (40) an der selben Radialseite oder Axialseite, vorzugsweise radial innen, eingeleitet wird.

7. Temperiergerät nach Anspruch 5 oder 6, **dadurch gekennzeichnet, dass** bei wenigstens einem Wärmeträgermedium-Zirkulationssektor (S) wenigstens eine Wärmeträgermediumleitung (46) vorzugsweise radial außen von der einen Wärmeträgermedium-Strömungszone (40) zu der anderen Wärmeträgermedium-Strömungszone (40) führt und wenigstens eine Wärmeträgermediumleitung (44) vorzugsweise radial innen von der anderen Wärmeträgermedium-Strömungszone (40) zu der einen Wärmeträgermedium-Strömungszone (40) führt.

8. Temperiergerät nach einem der Ansprüche 5-7, **dadurch gekennzeichnet, dass** bei wenigstens einer Wärmeträgermedium-Strömungszone (40) ein von oder zu dieser führender Leitungsabschnitt (70, 76, 80, 82) einer Wärmeträgermediumleitung (44, 46) mit einem von oder zu einer in der Drehrichtung (D) der Magnetfeldanordnung (24) auf diese Wärmeträgermedium-Strömungszone (40) folgenden Wärmeträgermedium-Strömungszone (40) führenden Leitungsabschnitt (70, 76, 80, 82) einer Wärmeträgermediumleitung (44, 46) verbindbar ist oder mit einem von oder zu einer in der Drehrichtung (D) der Magnetfeldanordnung (34) dieser Wärmeträgermedium-Strömungszone (40) vorangehenden Wärmeträgermedium-Strömungszone führenden Leitungsabschnitt (70, 76, 80, 82) einer Wärmeträgermediumleitung (44, 46) verbindbar ist.

9. Temperiergerät nach Anspruch 8, **dadurch gekennzeichnet, dass** der von oder zu der wenigstens einen Wärmeträgermedium-Strömungszone (40) führende Leitungsabschnitt (70, 76, 80, 82) einer Wärmeträgermediumleitung (44, 46) während einer ersten Betriebsphase mit dem von oder zu der in der Drehrichtung (D) der Magnetfeldanordnung (24) auf diese Wärmeträgermedium-Strömungszone (40) folgenden Wärmeträgermedium-Strömungszone (40) führenden Leitungsabschnitt (70, 76, 80, 82) einer Wärmeträgermediumleitung (44, 46) verbunden ist und während einer zweiten Betriebsphase mit dem von oder zu der in der Drehrichtung (D) der Magnetfeldanordnung (24) dieser Wärmeträgermedium-Strömungszone (40) vorangehenden Wärmeträgermedium-Strömungszone (40) führenden Leitungsabschnitt (70, 76, 80, 82) einer Wärmeträgermediumleitung verbunden ist.

10. Temperiergerät nach Anspruch 8 oder 9, **dadurch gekennzeichnet, dass** die Leitungsabschnitte (70, 76, 80, 82) durch ein Ventil (72, 84, 90) verbindbar sind.

11. Temperiergerät nach einem der Ansprüche 1-10, **dadurch gekennzeichnet, dass** wenigstens einem, vorzugsweise jedem, Wärmeträgermedium-Zirkulationssektor (S) eine Wärmeträgermediumpumpe (48) zugeordnet ist.

12. Temperiergerät nach Anspruch 11, **dadurch gekennzeichnet, dass** in Zuordnung zu jeder zweiten der in Umfangsrichtung aufeinanderfolgenden Wärmeträgermedium-Strömungszonen (40) eine Wärmeträgermediumpumpe (58, 58, 66) vorgesehen ist, derart, dass diese Wärmeträgermedium-Strömungszonen (40) in einer ersten Betriebsphase zusammen mit den in der Drehrichtung (D) der Magnetfeldanordnung (24) auf diese folgenden Wärmeträgermedium-Strömungszonen (40) jeweils einen Wärmeträgermedium-Zirkulationssektor (S) bereitstellen und in einer zweiten Betriebsphase zusammen mit den in der Drehrichtung (D) der Magnetfeldanordnung (24) diesen vorangehenden Wärmeträgermedium-Strömungszonen (40) jeweils einen Wärmeträgermedium-Zirkulationssektor (S) bereitstellen.

13. Temperiergerät nach einem der Ansprüche 1-12, **dadurch gekennzeichnet, dass** eine Mehrzahl von Wärmeträgermedium-Zirkulationssektoren (S₁, S₂, S₃) in Umfangsrichtung aufeinander folgend bereitgestellt.

14. Temperiergerät nach einem der Ansprüche 1-13, **dadurch gekennzeichnet, dass** zwischen zwei in Umfangsrichtung aufeinander folgend bereitgestellten Wärmeträgermedium-Zirkulationssektoren (S1, S2, S3) eine von Wärmeeintragfluid durchströmbare oder/und umströmbare Wärmeträgermedium-Strömungszone (52) und eine von Wärmeabfuhrfluid durchströmbare oder/und umströmbare Wärmeträgermedium-Strömungszone (50) angeordnet sind.

15. Temperiergerät nach einem der Ansprüche 1-14, **dadurch gekennzeichnet, dass** der Temperierkörper (12) in einem Temperierkörpergehäuse (22) aufgenommen ist.

16. Temperiergerät nach einem der Ansprüche 1-15, **dadurch gekennzeichnet, dass** die Magnetfeldanordnung (24) an wenigstens einer axialen Stirnseite (18) oder wenigsten einer Radialseite des Temperierkörpers (12) eine Mehrzahl von in Umfangsrichtung aufeinanderfolgend mit Abstand zueinander angeordneten und im Wesentlichen die Magnetfeld-Erwärmungsbereiche (36) bereitstellenden Magnete (30), vorzugsweise Permanentmagnete, umfasst, wobei zwischen in Umfangsrichtung mit Abstand zueinander angeordneten Magneten (30) die Kühlbereiche (38) bereitgestellt sind.

17. Temperiergerät nach Anspruch 16, **dadurch gekennzeichnet, dass** in Umfangsrichtung aufeinander folgende Magnete (30) an einem zur Drehung um die Drehachse (A) antreibbaren Magnetträgerring (26, 28) getragen sind.

18. Temperiergerät nach Anspruch 16 oder 17, **dadurch gekennzeichnet, dass** an beiden axialen Stirnseiten (18, 20) des Temperierkörpers (12) jeweils eine Mehrzahl von in Umfangsrichtung um die Drehachse (A) aufeinander folgend und mit Abstand zueinander angeordneten Magneten (30) vorgesehen ist, wobei wenigstens einem, vorzugsweise jedem, Magnet (30) an einer Stirnseite (18) ein Magnet (30) an der anderen Stirnseite (30) axial gegenüberliegt.

19. Temperiergerät nach einem der Ansprüche 1 bis 18, **dadurch gekennzeichnet, dass** wenigstens zwei in Richtung der Drehachse aufeinander folgend angeordnete Temperierkörper (12) vorgesehen sind, wobei vorzugsweise jedem Temperierkörper (12) eine Magnetfeldanordnung (24) zugeordnet ist.

## Claims

1. Temperature control unit, especially vehicle temperature control unit, comprising:
- at least one preferably ring-shaped temperature control body (12), which is made of magnetocaloric material and through which or/and around which heat transfer medium can flow,
- a magnetic field arrangement (24) rotatable about an axis of rotation (A), the magnetic field arrangement (24) providing magnetic field heating areas (36) arranged following one another in the circumferential direction about the axis of rotation and cooling areas (38) between magnetic field heating areas (36),
wherein a plurality of heat transfer medium flow zones (40) following one another in the circumferential direction are provided with the temperature control body (12), wherein at least two heat transfer medium flow zones (40) adjacent to one another in the circumferential direction provide a heat transfer medium circulation sector (S), wherein heat input fluid can flow through and/or around at least one heat transfer medium flow zone (52) for feeding heat into this heat transfer medium flow zone (52), or/and heat discharge fluid can flow through and/or around at least one heat transfer medium flow zone (50) for dissipating heat from this heat transfer medium flow zone (50), **characterized in that** at least one heat transfer medium flow zone (40) provides a heat transfer medium circulation sector (S) together with a heat transfer medium flow zone (40) following this heat transfer medium flow zone in a direction of rotation (D) of the magnetic field arrangement (24) during a first phase of operation and provides a heat transfer medium circulation sector (S) together with a heat transfer medium flow zone (40) preceding this heat transfer medium flow zone (40) in the direction of rotation (D) of the magnetic field arrangement (24) during a second phase of operation.

2. Temperature control unit in accordance with claim 1, **characterized in that** in one type of phases of operation out of the first phase of operation and the second phase of operation, heat discharge fluid can flow through the at least one heat transfer medium flow zone (50) through which heat discharge fluid can flow and heat input fluid can flow through the at least one heat transfer medium flow zone (52) through which heat input fluid can flow, and that in the other type of phases of operation out of a first phase of operation and a second phase of operation, the heat transfer medium flow zone (50) through which heat discharge fluid can flow together with a heat transfer medium flow zone (40) adjacent to this zone provides a heat transfer medium circulation sector (Si) and the heat transfer medium flow zone (52) through which heat input fluid can flow together with a heat transfer medium flow zone (40) adjacent to this zone provides a heat transfer medium circulation sector (S₄').

3. Temperature control unit in accordance with claim 1 or 2, **characterized in that** first phases of operation and second phases of operation alternate with one another.

4. Temperature control unit in accordance with one of the claims 1-3, **characterized in that** the number of first phases of operation or/and second phases of operation occurring during a full rotation of the magnetic field arrangement (34) is equal to the number of magnetic field heating areas (36) of the magnetic field arrangement (24).

5. Temperature control unit in accordance with one of the claims 1-4, **characterized in that** a circulation of heat transfer medium is provided in at least one heat transfer medium circulation zone (S), wherein during the circulation heat transfer medium is removed from the one heat transfer medium flow zone (40) of this heat transfer medium circulation sector (S) and fed into the other heat transfer medium flow zone (40) of this heat transfer medium circulation sector (S) and heat transfer medium is removed from the other heat transfer medium flow zone (40) and fed into the one heat transfer medium flow zone (40).

6. Temperature control unit in accordance with claim 5, **characterized in that** the heat transfer medium is removed from the one heat transfer medium flow zone (40) on a radial side or an axial side of the temperature control body (12), preferably radially outwards, and is fed into the other heat transfer medium flow zone (40) on the same radial side or axial side, preferably radially outwards, and is removed from the other heat transfer medium flow zone (40) on the other radial side or axial side, preferably radially inwards and is fed into the one heat transfer medium flow zone (40) on the same radial side or axial side, preferably radially inwards.

7. Temperature control unit in accordance with claim 5 or 6, **characterized in that** in at least one heat transfer medium circulation sector (S), at least one heat transfer medium line (46) leads preferably radially outwards from the one heat transfer medium flow zone (40) to the other heat transfer medium flow zone (40) and at least one heat transfer medium line (44) leads preferably radially inwards from the other heat transfer medium flow zone (40) to the one heat transfer medium flow zone (40).

8. Temperature control unit in accordance with one of the claims 5-7, **characterized in that** in at least one heat transfer medium flow zone (40), a line section (70, 76, 80, 82) of a heat transfer medium line (44, 46) leading from or to this zone can be connected to a line section (70, 76, 80, 82) of a heat transfer medium line (44, 46) leading from or to a heat transfer medium flow zone (40) following this heat transfer medium flow zone (40) in the direction of rotation (D) of the magnetic field arrangement (24) or can be connected to a line section (70, 76, 80, 82) of a heat transfer medium line (44, 46) leading from or to a heat transfer medium flow zone preceding this heat transfer medium flow zone (40) in the direction of rotation (D) of the magnetic field arrangement (34).

9. Temperature control unit in accordance with claim 8, **characterized in that** the line section (70, 76, 80, 82) of a heat transfer medium line (44, 46) leading from or to the at least one heat transfer medium flow zone (40) is connected to the line section (70, 76, 80, 82) of a heat transfer medium line (44, 46) leading from or to the heat transfer medium flow zone (40) following this heat transfer medium flow zone (40) in the direction of rotation (D) of the magnetic field arrangement (24) during a first phase of operation and is connected to the line section (70, 76, 80, 82) of a heat transfer medium line leading from or to the heat transfer medium flow zone (40) preceding this heat transfer medium flow zone (40) in the direction of rotation (D) of the magnetic field arrangement (24) during a second phase of operation.

10. Temperature control unit in accordance with claim 8 or 9, **characterized in that** the line sections (70, 76, 80, 82) can be connected by means of a valve (72, 84, 90).

11. Temperature control unit in accordance with one of the claims 1-10, **characterized in that** a heat transfer medium pump (48) is associated with at least one, preferably with each, heat transfer medium circulation sector (S).

12. Temperature control unit in accordance with claim 11, **characterized in that** a heat transfer medium pump (58, 58, 66) is provided in association with every other of the heat transfer medium flow zones (40) following one another in the circumferential direction such that these heat transfer medium flow zones (40) together with the heat transfer medium flow zones (40) following these zones in the direction of rotation (D) of the magnetic field arrangement (24) provide each a heat transfer medium circulation sector (S) in a first phase of operation and together with the heat transfer medium flow zones (40) preceding these zones in the direction of rotation (D) of the magnetic field arrangement (24) provide each a heat transfer medium circulation sector (S) in a second phase of operation.

13. Temperature control unit in accordance with one of the claims 1-12, **characterized in that** a plurality of heat transfer medium circulation sectors (S₁, S₂, S₃) are provided following one another in the circumferential direction.

14. Temperature control unit in accordance with one of the claims 1-13, **characterized in that** a heat transfer medium flow zone (52) through which or/and around which heat input fluid can flow and a heat transfer medium flow zone (50) through which or/and around which heat discharge fluid can flow are arranged between two heat transfer medium circulation sectors (S₁, S₂, S₃) provided following one another in the circumferential direction.

15. Temperature control unit in accordance with one of the claims 1-14, **characterized in that** the temperature control body (12) is received in a temperature control body housing (22).

16. Temperature control unit in accordance with one of the claims 1-15, **characterized in that** the magnetic field arrangement (24) on at least one axial end face (18) or at least one radial side of the temperature control body (12) comprises a plurality of magnets (30), preferably permanent magnets, which are arranged spaced apart from one another and following one another in the circumferential direction and which provide essentially the magnetic field heating areas (36), the cooling areas (38) being provided between magnets (30) arranged spaced apart from one another in the circumferential direction.

17. Temperature control unit in accordance with claim 16, **characterized in that** magnets 30 following one another in the circumferential direction are carried in a magnet carrier ring (26, 28) which can be driven for rotation about the axis of rotation (A).

18. Temperature control unit in accordance with claim 16 or 17, **characterized in that** a plurality of magnets (30) following one another in the circumferential direction about the axis of rotation (A) and arranged spaced apart from one another are provided each on both axial end faces (18, 20) of the temperature control body (12), one magnet (30) on the other end face (30) located axially opposite at least one, preferably each, magnet (30) on one end face (18).

19. Temperature control unit in accordance with one of the claims 1-18, **characterized in that** at least two temperature control bodies (12) arranged following one another in the direction of the axis of rotation are provided, a magnetic field arrangement (24) preferably being associated with each temperature control body (12).

## Revendications

1. Système de régulation de la température, notamment système de régulation de la température d'un véhicule, comprenant :
- au moins un corps de régulation de la température (12), de préférence de forme annulaire, qui est fabriqué en matériau magnétocalorique et qui peut être traversé et/ou entouré par un médium caloporteur,
- un agencement de champ magnétique (24) pouvant tourner autour d'un axe de rotation (A), l'agencement de champ magnétique(24) fournissant des zones de chauffage de champ magnétique (36) disposées se succédant dans la direction circonférentielle autour de l'axe de rotation et des zones de refroidissement (38) entre des zones de chauffage de champ magnétique (36),
dans lequel une pluralité de zones d'écoulement de médium caloporteur (40) se succédant dans la direction circonférentielle sont prévues avec le corps de régulation de température (12), dans lequel au moins deux zones d'écoulement de médium caloporteur (40) adjacentes l'une à l'autre dans la direction circonférentielle fournissent un secteur de circulation de médium caloporteur (S),
dans lequel le fluide d'entrée de chaleur peut s'écouler à travers et/ou autour d'au moins une zone d'écoulement de médium caloporteur (52) pour alimenter en chaleur cette zone d'écoulement de médium caloporteur (52), ou/et le fluide de sortie de chaleur peut s'écouler à travers et/ou autour d'au moins une zone d'écoulement de médium caloporteur (50) pour évacuer de la chaleur de cette zone d'écoulement de médium caloporteur (50), **caractérisé en ce qu'**au moins une zone d'écoulement de médium caloporteur (40) prévoit, pendant une première phase de fonctionnement, un secteur de circulation de médium caloporteur (S) ensemble avec une zone d'écoulement de médium caloporteur (40) suivant cette zone d'écoulement de médium caloporteur dans une direction de rotation (D) de l'agencement de champ magnétique (24) et, pendant une deuxième phase de fonctionnement, un secteur de circulation de médium caloporteur (S) avec une zone d'écoulement de médium caloporteur (40) précédant cette zone d'écoulement de médium caloporteur (40) dans la direction de rotation (D) de l'agencement de champ magnétique (24).

2. Système de régulation de la température selon la revendication 1, **caractérisée en ce que**, dans un type de phases de fonctionnement parmi la première phase de fonctionnement et la deuxième phase de fonctionnement, un fluide de sortie de chaleur peut s'écouler à travers ladite au moins une zone d'écoulement de médium caloporteur (50) à travers laquelle le fluide de sortie de chaleur peut s'écouler et un fluide d'entrée de chaleur peut s'écouler à travers ladite au moins une zone d'écoulement de médium caloporteur (52) à travers laquelle le fluide d'entrée de chaleur peut s'écouler, et que dans l'autre type de phases de fonctionnement parmi la première phase de fonctionnement et la deuxième phase de fonctionnement, la zone d'écoulement de médium caloporteur (50), à travers laquelle le fluide de sortie de chaleur peut s'écouler ensemble avec une zone d'écoulement de médium caloporteur (40) adjacente à cette zone, constitue un secteur de circulation de médium caloporteur (Si) et la zone d'écoulement de médium caloporteur (52), à travers laquelle le fluide d'entrée de chaleur peut s'écouler ensemble avec une zone d'écoulement de médium caloporteur (40) adjacente à cette zone, constitue un secteur de circulation de médium caloporteur (S_{4'}).

3. Système de régulation de température selon les revendications 1 ou 2, **caractérisée en ce que** les premières phases de fonctionnement et les secondes phases de fonctionnement alternent les unes avec les autres.

4. Système de régulation de température selon l'une des revendications 1-3, **caractérisée en ce que** le nombre de premières phases de fonctionnement et/ou de secondes phases de fonctionnement se produisant pendant une rotation complète de l'agencement de champ magnétique (34) est égal au nombre de zones de chauffage de champ magnétique (36) de l'agencement de champ magnétique (24).

5. Système de régulation de température selon l'une des revendications 1-4, **caractérisée en ce qu'**une circulation de médium caloporteur est prévue dans au moins un secteur de circulation de médium caloporteur (S), dans laquelle, pendant la circulation, le médium caloporteur est évacué de ladite une zone d'écoulement de médium caloporteur (40) de ce secteur de circulation de médium caloporteur (S) et introduit dans l'autre zone d'écoulement de médium caloporteur (40) de ce secteur de circulation de médium caloporteur (S) et le médium caloporteur est évacué de l'autre zone d'écoulement de médium caloporteur (40) et introduit dans ladite une zone d'écoulement de médium caloporteur (40).

6. Régulateur de température selon la revendication 5, **caractérisé en ce que** le médium caloporteur est évacué de ladite une zone d'écoulement de médium caloporteur (40) sur un côté radial ou un côté axial du corps de régulation de température (12), de préférence radialement vers l'extérieur, et est introduit dans l'autre zone d'écoulement de médium caloporteur (40) sur le même côté radial ou axial, de préférence radialement vers l'extérieur, et est évacué de l'autre zone d'écoulement de médium caloporteur (40) sur l'autre côté radial ou axial, de préférence radialement vers l'intérieur et est introduit dans la première zone d'écoulement de médium caloporteur (40) sur le même côté radial ou axial, de préférence radialement vers l'intérieur.

7. Système de régulation de température selon la revendication 5 ou 6, **caractérisée en ce que** dans au moins un secteur de circulation de médium caloporteur (S), au moins une conduite de médium caloporteur (46) mène de préférence radialement vers l'extérieur de ladite une zone d'écoulement de médium caloporteur (40) à l'autre zone d'écoulement de médium caloporteur (40) et au moins une conduite de médium caloporteur (44) mène de préférence radialement vers l'intérieur de l'autre zone d'écoulement de médium caloporteur (40) à ladite une zone d'écoulement de médium caloporteur (40).

8. Système de régulation de température selon l'une des revendications 5-7, **caractérisée en ce que** dans au moins une zone d'écoulement de médium caloporteur (40), une section de conduite (70, 76, 80, 82) d'une conduite de médium caloporteur (44, 46) menant de ou vers cette zone peut être raccordé à une section de conduite (70, 76, 80, 82) d'une conduite de médium caloporteur (44, 46) menant de ou vers une zone d'écoulement de médium caloporteur (40) suivant cette zone d'écoulement de médium caloporteur (40) dans la direction de rotation (D) de l'agencement de champ magnétique (24) ou peut être raccordé à une section de conduite (70, 76, 80, 82) d'une conduite de médium caloporteur (44, 46) menant de ou vers une zone d'écoulement de médium caloporteur précédant cette zone d'écoulement de médium caloporteur (40) dans la direction de rotation (D) de l'agencement de champ magnétique (34).

9. Système de régulation de température selon la revendication 8, **caractérisée en ce que** la section de conduite (70, 76, 80, 82) d'une conduite de médium caloporteur (44, 46) menant de ou vers ladite au moins une zone d'écoulement de médium caloporteur (40) est raccordé à la section de conduite (70, 76, 80, 82) d'une conduite de médium caloporteur (44, 46) menant de ou vers la zone d'écoulement de médium caloporteur (40) suivant cette zone d'écoulement de médium caloporteur (40) dans la direction de rotation (D) de l'agencement de champ magnétique (24) pendant une première phase de fonctionnement, et pendant une deuxième phase de fonctionnement, est raccordée à la section de conduite (70, 76, 80, 82) d'une conduite de médium caloporteur menant de ou vers la zone d'écoulement de médium caloporteur (40) précédant cette zone d'écoulement de médium caloporteur (40) dans la direction de rotation (D) de l'agencement de champ magnétique (24).

10. Système de régulation de température selon la revendication 8 ou 9, **caractérisée en ce que** les sections de conduite (70, 76, 80, 82) peuvent être raccordées au moyen d'une vanne (72, 84, 90).

11. Système de régulation de température selon l'une des revendications 1-10, **caractérisée en ce qu'**une pompe à médium caloporteur (48) est associée à au moins un, de préférence à chaque, secteur de circulation de médium caloporteur (S).

12. Système de régulation de température selon la revendication 11, **caractérisée en ce qu'**une pompe à médium caloporteur (58, 58, 66) est prévue en association avec une sur deux des zones d'écoulement de médium caloporteur (40) se succédant dans la direction circonférentielle de telle sorte que ces zones d'écoulement de médium caloporteur (40) ensemble avec les zones d'écoulement de médium caloporteur (40) suivant ces zones dans la direction de rotation (D) de l'agencement de champ magnétique (24) fournissent chacune un secteur de circulation de médium caloporteur (S) dans une première phase de fonctionnement et, dans une deuxième phase de fonctionnement ensemble avec les zones d'écoulement de médium caloporteur (40) précédant ces zones dans la direction de rotation (D) de l'agencement de champ magnétique (24), fournissent chacune un secteur de circulation de médium caloporteur (S).

13. Système de régulation de température selon l'une des revendications 1-12, **caractérisée en ce qu'**une pluralité de secteurs de circulation de médium caloporteur (S₁, S₂, S₃) sont prévus se succédant dans la direction circonférentielle.

14. Système de régulation de température selon l'une des revendications 1-13, **caractérisée en ce qu'**une zone d'écoulement de médium caloporteur (52), dans laquelle et/ou autour de laquelle peut circuler un fluide d'entrée de chaleur, et une zone d'écoulement de médium caloporteur (50), dans laquelle et/ou autour de laquelle peut circuler un fluide de sortie de chaleur, sont disposées entre deux secteurs de circulation de médium caloporteur (S₁, S₂, S₃) prévus se succédant dans la direction circonférentielle.

15. Système de régulation de température selon l'une des revendications 1-14, **caractérisée en ce que** le corps de régulation de température (12) est reçu dans un boîtier de corps de régulation de température (22).

16. Système de régulation de température selon l'une des revendications 1-15, **caractérisée en ce que** l'agencement de champ magnétique (24) comprend, sur au moins une face frontale axiale (18) ou au moins un côté radial du corps de régulation de température (12), une pluralité d'aimants (30), de préférence des aimants permanents, qui sont disposés à distance les uns des autres se succédant dans la direction circonférentielle et qui fournissent essentiellement les zones de chauffage de champ magnétique (36), les zones de refroidissement (38) étant prévues entre des aimants (30) disposés à distance les uns des autres dans la direction circonférentielle.

17. Système de régulation de température selon la revendication 16, **caractérisé en ce que** des aimants (30) se succédant dans la direction circonférentielle sont portés dans une bague porte-aimants (26, 28) qui peut être entraînée en rotation autour de l'axe de rotation (A).

18. Système de régulation de température selon la revendication 16 ou 17, **caractérisé en ce qu'**une pluralité d'aimants (30) se succédant dans la direction circonférentielle autour de l'axe de rotation (A) et disposés à distance les uns des autres sont prévus respectivement sur les deux faces frontales axiales (18, 20) du corps de régulation de température (12), un aimant (30) sur l'autre face frontale (30) étant axialement opposé à au moins un, de préférence à chaque aimant (30) sur ladite une face frontale (18).

19. Système de régulation de température selon l'une des revendications 1 à 18, **caractérisée en ce qu'**il est prévu au moins deux corps de régulation de température (12) disposés se succédant dans la direction de l'axe de rotation, un agencement de champ magnétique (24) étant de préférence associé à chaque corps de régulation de température (12).
